# EUROPÄISCHE PATENTANMELDUNG

(11) **EP 1 004 229 A2**
(43) Veröffentlichungstag der Anmeldung: **31.05.2000**
(21) Anmeldenummer: 99123407.1
(22) Anmeldetag: 24.11.1999
(51) Int. Cl.: A01B 33/10

(54) **Bodenbearbeitungswerkzeug für Kreiseleggen**

(30) Priorität: 26.11.1998 DE 19854686
(71) Anmelder: NIEMEYER Landmaschinen GmbH, D-48477 Hörstel-Riesenbeck (DE)
(72) Erfinder: Laumann, Bernhard, 48477 Hörstel-Riesenbeck (DE)

(57) **Zusammenfassung**

Bodenbearbeitungswerkzeug für Zinkenkreisel (2) von Bodenbearbeitungswerkzeugen, insbesondere Kreiseleggen (1), in Gestalt eines mit seiner Längserstreckung annähernd zur Kreiselachse (3) ausgerichteten Vertikalzinken (7,7'), wobei auf der Außenseite des Vertikalzinkens (7 oder 7') im oberen Bereich von dessen Längserstreckung ein Horizontalzinken (8 oder 8') angeordnet ist, dessen Längserstreckung annähernd radial zur Kreiselachse (3) nach außen gerichtet ist.

## Beschreibung

Die Erfindung betrifft rotierende Bodenbearbeitungswerkzeuge insbesondere für Kreiseleggen gemäß dem Oberbegriff des Patentanspruchs 1.

Bodenbearbeitungswerkzeuge für Kreiseleggen nach dem gattungsbildenden Oberbegriff des Anspruchs 1 sind beispielsweise in der DE 297 09 134 U1 beschrieben.

Die Bodenbearbeitungswerkzeuge von Kreiseleggen sind Bestandteil von mehreren nebeneinander angeordneten, zwangsläufig gegensinnig angetriebenen Werkzeugkreiseln. Die in der DE 297 09 134 U1 beschriebenen Bodenbearbeitungswerkzeuge sind so gestaltet und einander zugeordnet, daß die vorteilhaften Wirkungen von schneidenden und krümelnden Bodenbearbeitungswerkzeugen in einem Werkzeugkreisel vereinigt sind.

Kreiseleggen werden überwiegend eingesetzt zur Herstellung von Saatbeeten insbesondere auch in Verbindung mit der Einarbeitung biologischer Masse, beispielsweise die biologische Masse von Pflanzenresten abgeernteter Felder. Der Einsatz von Kreiseleggen bietet insbesondere Vorteile in Verbindung mit der Direktsaat. In diesem Zusammenhang ist die gleichmäßige und möglichst vollständige Einarbeitung der biologische Masse für einen schnellen Verrottungsprozess bei gleichzeitiger Herstellung eines feinkrümeligen ebenen Saatbeetes für den Saataufgang bedeutsam.

Insbesondere in Zusammenhang mit der Bearbeitung nasser und bindiger Böden, die mit Wurzelfaserresten durchsetzt und vernetzt sind, können sich während der Bearbeitung des Bodens mit Bodenbearbeitungswerkzeugen von Kreiseleggen, in dem von den Bodenbearbeitungszinken umkreisten Raum eines Zinkenkreisels Bodenverklumpungen bilden, welche sich dort festsetzen. Dieses wird durch die Rotationsbewegungen der Zinkenkreisel bei Vorhandensein von Wurzelfaserresten zusätzlich unterstützt, indem die Rotationsbewegung einen Einzug des Bodens durch Wickeln bewirkt, welches einen zusätzlichen Verdichtungseffekt auf Bodenverklumpungen innerhalb der Zinkenkreisel ausübt.

Tritt dieser Effekt ein, verkeilt sich die Bodenverklumpung innerhalb der Zwischenraums der Bodenbearbeitungszinken von Zinkenkreiseln, welches zur Verstopfung der Durchgangsräume der Zinkenkreisel führen kann.

Dieses Störverhalten wirkt sich nachteilig auf den Vorgang der Bodenbearbeitung aus, welches einer guten Durchmischung des Bodens entgegenwirkt. Gleichzeitig nehmen die Traktionskräfte für den Schleppzug und die Leistungsaufnahme für den Antrieb der Kreiselegge unter den zuvor genannten Störbedingungen erheblich zu, so daß der Arbeitsvorgang im Extremfall zur Störungsbeseitigung unterbrochen werden muß.

Der Erfindung liegt die Aufgabe zugrunde, auf einfache Weise für bekannte Kreiseleggen verbesserte Bodenbearbeitungswerkzeuge zu schaffen, die eine gleichmäßigere Durchmischung des Bodens im Bereich des oberen Bodenhorizontes, insbesondere auch unter dem Gesichtspunkt der Einarbeitung von biologischer Masse, herbeiführen, und die gleichzeitig ein Verklumpen des Bodens innerhalb des Wirkungsraumes der Zinkenkreisel zwischen den Bodenbearbeitungswerkzeugen verhindern.

Diese Aufgabe wird erfindungsgemäß durch die kennzeichnenden Merkmale des Anspruchs 1 gelöst.

Die an sich bekannten Bodenbearbeitungswerkzeuge eines Zinkenkreisels, welche als Bodenbearbeitungszinken überwiegend vertikal mit dem Boden in Eingriff stehen, werden nach der Erfindung ergänzt durch zusätzliche Horizontalzinken, welche überwiegend in radialer Richtung zur Zinkenkreiselachse ausgerichtet sind. Die Horizontalzinken sind Bestandteil eines Zinkenkreisels. Die Horizontalzinken können fester oder lösbarer Bestandteil eines Bodenbearbeitungwerkzeuges sein, beispielsweise in Verbund mit einem Vertikalzinken. Ebenso können Vertikalzinken und Horizontalzinken als einzelne Bodenbearbeitungswerkzeuge gemeinsam mit einem Werkzeugträger eines Zinkenkreisels mit diesem lösbar verbunden sein. Alternativ ist es auch möglich, daß mehrere Vertikalzinken und mehrere Horizontalzinken zu einer festen Einheit verbunden mit einem Zinkenkreisel eine Einheit bilden.

Diese Horizontalzinken eines Zinkenkreisels überstreichen im Betriebszustand einer Kreiselegge während einer Umdrehung jeweils zwei Teilbereiche der Bearbeitungsbereiche seiner benachbarten Zinkenkreisel. In besonders vorteilhafter Weise weisen die Horizontalzinken eine Schränkung gegenüber ihrer Umlaufbahn lotrecht zur Kreiselachse auf. Diese Radialzinken, insbesondere in geschränkter Ausführung, bewirken während ihrer Rotationsbewegungen eine zusätzliche Verwirbelung des Bodens und einen Quertransport in vertikaler Richtung aufwärts gerichtet, welches eine gleichmäßige Vermischung des Bodens mit biologischer Masse bei erhöhtem Lufteintrag insbesondere im oberen Bereich des Bodenbearbeitungshorizontes ermöglicht.

Durch den Eingriff der rotierenden Horizontalzinken in den Arbeitsbereich benachbarter Zinkenkreisel im Betriebszustand einer Kreiselegge, insbesondere in den Bereich des von den Vertikalzinken umkreisten Raumes eines Zinkenkreisels, führt dieses im Ergebnis dazu, daß ein jeweils benachbarter Zinkenkreisel Bodenverklumpungen und damit Verstopfungen innerhalb der Durchgangsräume eines Zinkenkreisels verhindert, indem Bodenverklumpungen durch Wickelvorgänge basierend auf bodendurchsetzte Wurzelfaserreste herbeiführbar, bereits im Ansatz ihres Entstehens zerrissen und zertrümmert werden.

Weitere Einzelheiten der Erfindung sind der Beispielsbeschreibung und den Zeichnungen zu entnehmen. Hierbei zeigen:
- Fig. 1 -: Eine Kreiselegge mit Zinkenkreiseln nach der Erfindung
- Fig. 2 -: Schnitt A-A gemäß Fig. 1 nach der Erfindung
- Fig. 3 -: Eine Gruppe von Zinkenkreiseln gemäß Einzelheit X in Fig. 1
- Fig. 4 -: Schnitt B-B gemäß Fig. 3
- Fig. 5 -: Darstellung des Überdeckungsbereiches benachbarter Zinkenkreisel
- Fig. 6 -: Eine Gruppe von drei Zinkenkreiseln gemäß Fig. 4 mit höhenversetztten Horizontalzinken
- Fig. 7 -: Eine Gruppe von drei Zinkenkreiseln gemäß Fig. 4 mit höhenversetztten Horizontalzinken benachbarter Zinkenkreisel
- Fig. 8 -: Ein Zinkenkreisel mit lösbar an diesem angeschraubten Horizontalzinken

### Bezugszeichenliste:

- 1 -: Kreiselegge
- 2 -: Zinkenkreisel
- 2' -: äußerer Zinkenkreisel
- 3 -: Kreiselachse
- 4 -: Zinkenkreisellager
- 5 -: Werkzeugträger
- 6 -: Getriebekasten
- 7,7' -: Vertikalzinken
- 8,8',8'',8'''' -: Horizontalzinken
- 9 -: Messerspitzen
- 10 -: Flugkreis
- 11 -: Innenkreis
- 12 -: Überdeckungsbereich
- 13 -: Schneide
- 14 -: Seitenblech
- 15 -: Schnittpunkt
- 16 -: Verbindungsschraube
- 17,17': Drehrichtung
- F -: Fahrtrichtung
- R₁ -: Innenkreisradius
- R₂ -: Flugkreisradius
- α -: Öffnungswinkel
- β -: Anstellwinkel
- γ -: Freiwinkel
- δ -: Verschränkungswinkel

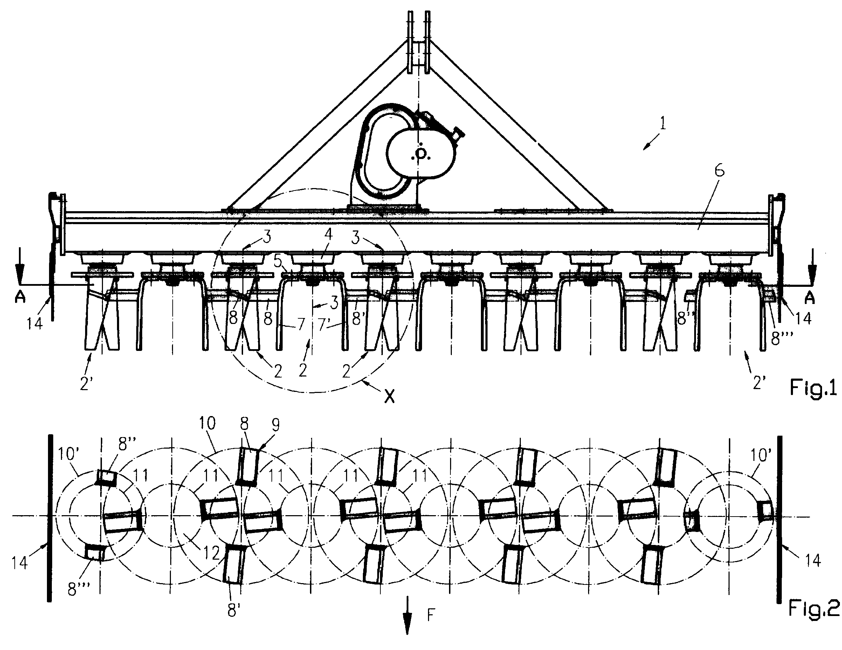

Fig. 1 zeigt eine Kreiselegge (1) mit Zinkenkreiseln (2) nach der Erfindung. In einem Getriebekasten (6) befindet sich in bekannter Weise ein Zahnradgetriebe, dessen Zahnräder mit den Zinkenkreiseln (2) antreibend in Eingriff stehen. Die Zinkenkreisel (2) verfügen über einen Werkzeugträger (5), der in den Zinkenkreisellagern (4) dreh- und antreibbar gelagert ist. Jeder Zinkenkreisel (2) rotiert um seine Kreiselachse (3). Ein Zinkenkreisel (2) ist vorzugsweise mit zwei Vertikalzinken (7,7') bestückt, die beispielsweise mit dem Werkzeugträger (5) verschraubt sind. Die Vertikalzinken (7,7') weisen Horizontalzinken (8,8') bzw. (8'',8''') auf, welche mit dem Vertikalzinken (7,7') eine Einheit bilden. Die Horizontalzinken (8,8') bzw. (8'',8''') können beispielsweise mit den Vertikalzinken (7,7') verschweißt, verschraubt sein, oder direkt angeschmiedet sein. Zwecks Verhinderung einer Dammbildung ist an den Rändern der Arbeitsbreite geräteseitig je ein Seitenblech (14) an der Kreiselegge (1) angebracht, so daß die äußeren Zinkenkreisel (2') mit verkürzten Horizontalzinken (8'',8''') bestückt sind. Die Horizontalzinken (8,8'); (8'',8''') sind in diesem Ausführungsbeispiel ausgebildet als Messerzinken.

Fig. 2 zeigt den Schnitt A-A gemäß Fig. 1 in Fahrtrichtung (F). Die Messerspitzen (9) der Horizontalzinken (8,8'); (8'',8''') bewegen sich um ihre Kreiselachse (3) auf dem Flugkreis (10,10'). Innerhalb eines Zinkenkreisels (2) tangieren die Vertikalzinken (7,7') während ihrer Drehbewegung den Innenkreis (11), so daß die Mantellinien aller Innenkreise einen gedachten Rotationskörper zwischen den Vertikalzinken (7,7') eines Zinkenkreisels (2) bilden.

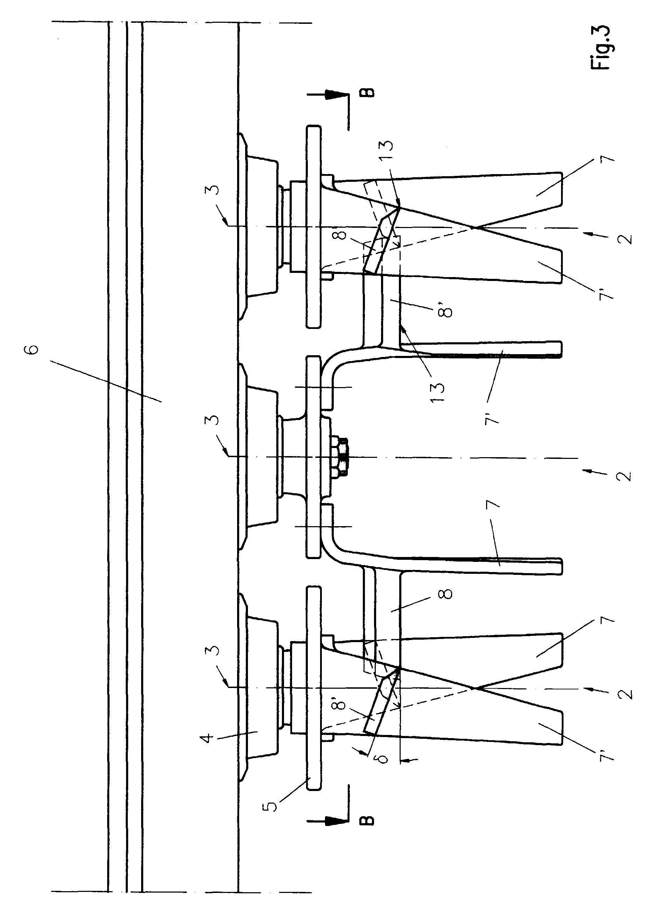

Fig. 3 zeigt die vergrößerte Darstellung einer Gruppe von drei Zinkenkreiseln gemäß Einzelheit X in Fig. 1. Die Horizontalzinken (8,8') mit ihrer jeweiligen Schneide (13) sind gegenüber ihren Rotationsebenen lotrecht zur Kreiselachse (3) verschränkt mit dem Verschränkungswinkel (δ) angeordnet.

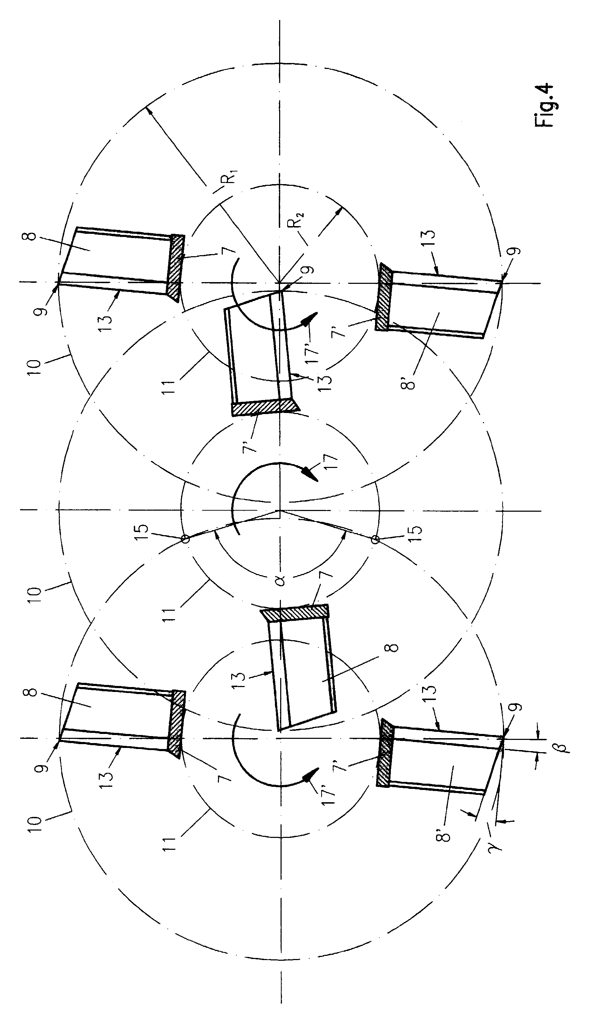

Fig. 4 zeigt den Schnitt B-B gemäß Fig.3. Die Vertikalzinken (7,7') umkreisen in ihrem Betriebszustand den Innenkreis (11) mit dem Innenkreisradius (R₁). Benachbarte Zinkenkreisel (2) drehen jeweils gegensinnig mit den Drehrichtungen (17,17'). Die Messerspilzen (9) der Horizontalzinken (8,8') der Zinkenkreisel (2) bewegen sich jeweils auf ihren Flugkreisen (10) mit dem Flugkreisradius (R₂). Die Horizontalzinken (8,8') eines Zinkenkreisels (2) überdecken während ihrer Umdrehungen einen Teil der Innenkreise (11) der benachbarten Zinkenkreisel (2). Die gemeinsame Überdeckung aus Innenkreis (11) und Flugkreis (10) ergibt den Überdeckungsbereich (12) zweier benachbarter Zinkenkreisel (2).

Dieser gemeinsame Überdeckungsbereich (12) ist definiert durch den Öffnungswinkel (α), bezogen auf die Kreiselachse (3), welche gleichzeitig den Kreismittelpunkt des Flugkreises (10) definiert. Die Fläche des Überdeckungsbereiches (12) wird gebildet durch die Überdeckung eines Flugkreises (10) eines benachbarten Zinkenkreisels (2) mit einem Innenkreis (11), wobei Flugkreis (10) und Innenkreis (11) sich in den Schnittpunkten (15) schneiden.

In dem dargestellten Ausführungsbeispiel sind die Horizontalzinken (8,8') um den Anstellwinkel (β) gegenüber der Kreiselachse (3) tangential angestellt, welches keine notwendige Voraussetzung der Erfindung ist.

Die Enden der Horizontalzinken (8,8') sind zur Reduzierung des Kraftbedarfs um den Freiwinkel (γ) abgeschrägt.

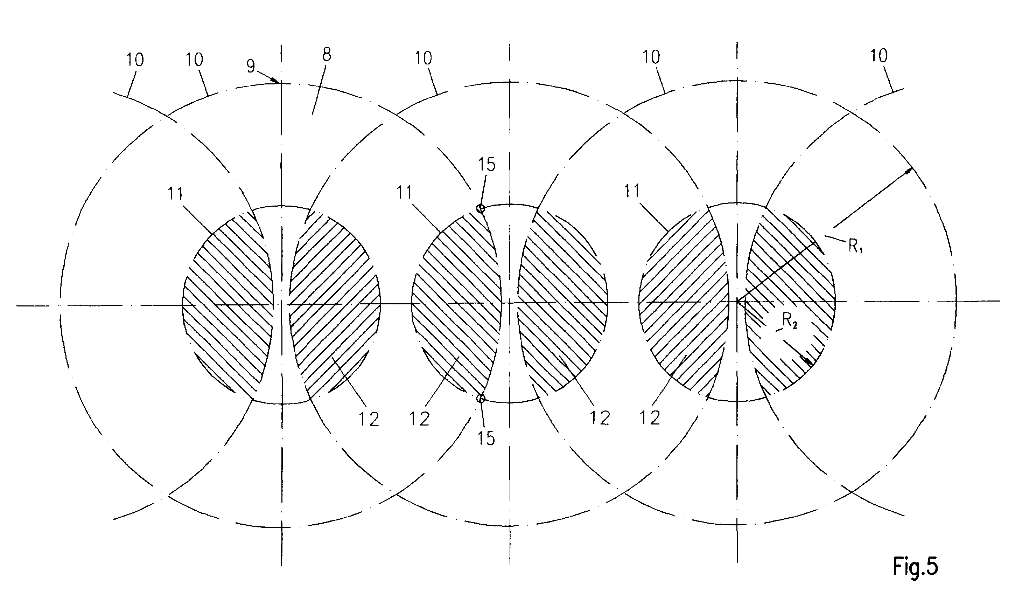

Fig. 5 zeigt die Darstellung der Überdeckungsbereiche (12) benachbarter Zinkenkreisel (2), wobei die Überdeckungsbereiche (12) schraffiert dargestellt sind.

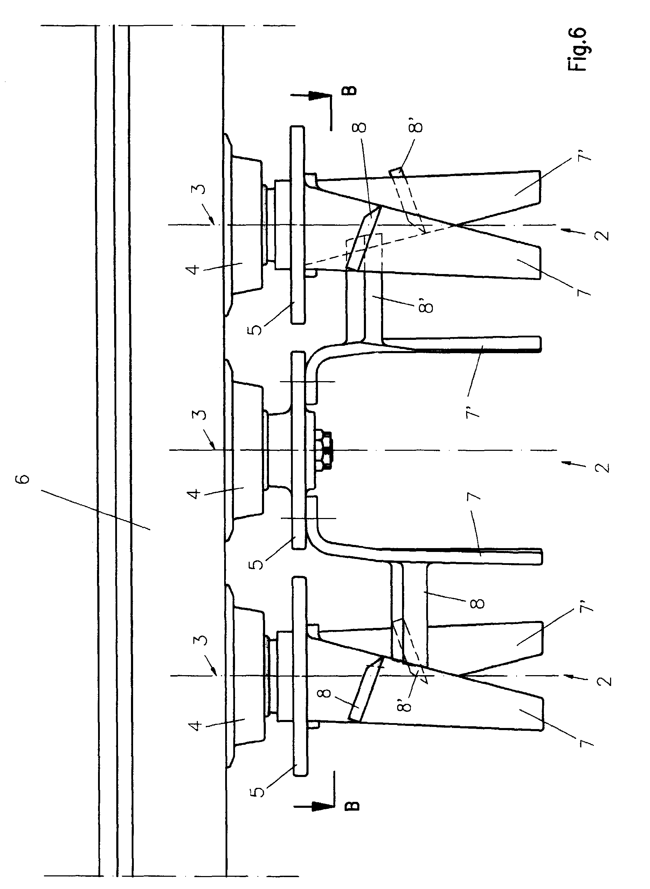

Fig. 6 zeigt eine Gruppe von drei Zinkenkreiseln (2) gemäß Fig. 4, wobei die Horizontalzinken (8,8') je Zinkenkreisel (2) gegeneinander höhenversetzt sind. In diesem Ausführungsbeispiel ergeben sich die Überdeckungsbereiche (12) ebenfalls höhenversetzt. Der Schnitt B-B entspricht der Fig. 4.

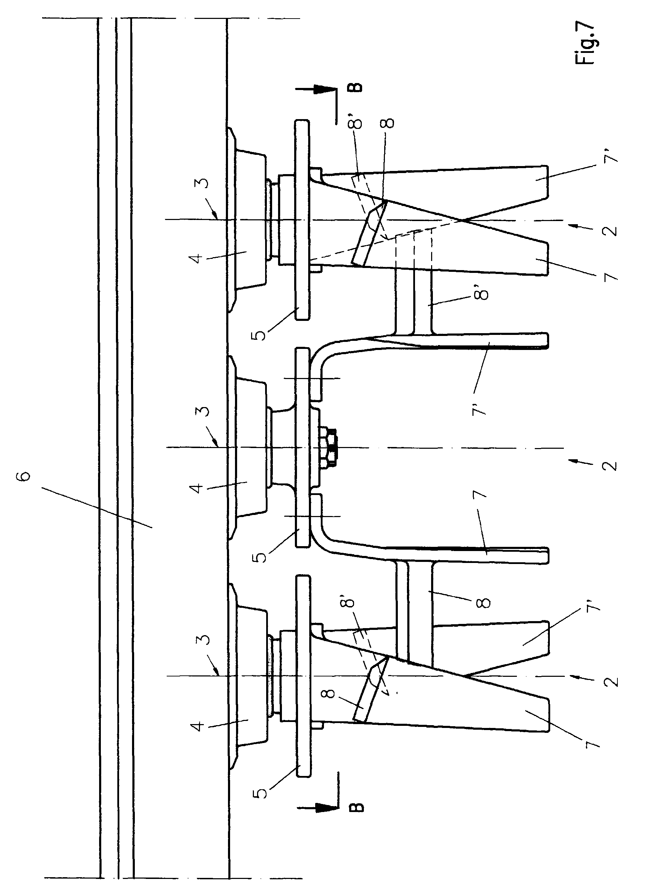

Fig. 7 zeigt eine Gruppe von drei Zinkenkreiseln (2) gemäß Fig. 4, wobei die Horizontalzinken (8,8') je Zinkenkreisel (2) zwar auf gleicher Höhe angeordnet sind, jedoch gegenüber zwei benachbarten Kreiselzinken höhenversetzt sind. Der Schnitt B-B entspricht der Fig. 4.

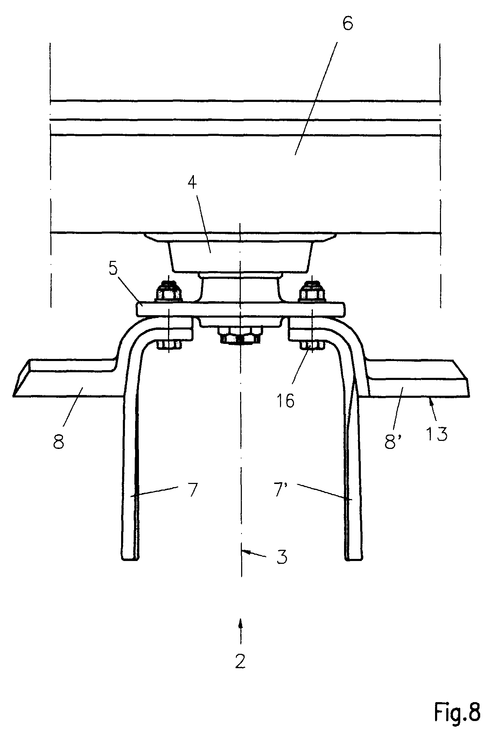

In Fig. 8 ist ein weiteres Ausführungsbeispiel eines Bodenbearbeitungswerkzeugs nach der Erfindung in Verbindung mit einem Zinkenkreisels (2) dargestellt. In diesem Ausführungsbeispiel sind die Horizontalzinken (8,8') und die Vertikalzinken gemeinsam mit dem Werkzeugträger (5) mittels Verbindungsschrauben (16) miteinander verschraubt, wodurch diese eine lösbare Verbindung miteinander eingehen.

Kreiseleggen mit Bodenbearbeitungswerkzeugen nach der Erfindung ermöglichen es, die Umlauffrequenz der Zinkenkreisel in deren Betriebszustand gegenüber Bodenbearbeitungswerkzeugen ohne Horizontalzinken (8,8'), zu reduzieren. Insgesamt führt dieses eine gleichmäßigere Bodendurchmischung mit organischer Masse insbesondere innerhalb des oberen Bodenhorizontes herbei. Die Verwirbelungseffekte der Horizontalzinken (8,8') sind mit einer zusätzlichen Durchlüftung des Bodens gekoppelt, in deren Folge der für biologische Zersetzungsprozesse von organischer Masse erforderliche Sauerstoffanteil des Bodens erhöht wird.

## Patentansprüche

1. Bodenbearbeitungswerkzeug für Zinkenkreisel (2) von Bodenbearbeitungswerkzeugen, insbesondere Kreiseleggen (1), in Gestalt eines mit seiner Längserstreckung annähernd zur Kreiselachse (3) ausgerichteten Vertikalzinken (7,7'), **dadurch gekennzeichnet,** dass auf der Außenseite des Vertikalzinkens (7 oder 7') im oberen Bereich von dessen Längserstreckung ein Horizontalzinken (8 oder 8') angeordnet ist, dessen Längserstreckung annähernd radial zur Kreiselachse (3) nach außen gerichtet ist.

2. Bodenbearbeitungswerkzeug nach Anspruch 1, **dadurch gekennzeichnet,** dass bei Einbau in Zinkenkreisel von Bodenbearbeitungsgeräten, insbesondere Kreiseleggen, mit mindestens zwei Vertikalzinken (7,7') als Bodenbearbeitungswerkzeugen mindestens ein Vertikalzinken (7 oder 7') mit einem Horizontalzinken (8 oder 8') versehen ist.

3. Bodenbearbeitungswerkzeug nach Anspruch 1 oder 2, **dadurch gekennzeichnet,** dass bei mehreren, quer zur Fahrtrichtung nebeneinander um etwa vertikale Kreiselachsen (3) drehbar gelagerten, zwangsläufig gegensinnig angetriebenen, gemeinsam eine Kreiselegge (1) bildenden Zinkenkreiseln (2), zumindest ein Vertikalzinken (7,7') der jeweils mit mindestens zwei Vertikalzinken (7,7') bestückten Zinkenkreisel (2) einen Horizontalzinken (8 oder 8') aufweist.

4. Bodenbearbeitungswerkzeug nach einem der Ansprüche 1 bis 3, **dadurch gekennzeichnet,** daß der Horizontalzinken (8,8') mit dem ihm zugeordneten Vertikalzinken (7,7') eine Einheit bildet.

5. Bodenbearbeitungswerkzeug nach einem der Ansprüche 1 bis 4, **dadurch gekennzeichnet,** daß Vertikalzinken (7,7') und Horizontalzinken (8,8') untereinander lösbar verbunden sind.

6. Bodenbearbeitungswerkzeug nach einem der Ansprüche 1 bis 5, **dadurch gekennzeichnet,** daß der seinem Vertikalzinken (7,7') zugeordnete Horizontalzinken (8,8') mit der die Kreiselachse senkrecht schneidenden Umlaufebene einen sich rückwärts aufwärts öffnenden Verschränkungswinkel (δ) einschließt.

7. Bodenbearbeitungswerkzeug nach einem der Ansprüche 1 bis 6, **dadurch gekennzeichnet,** daß der Horizontalzinken (8,8') einen mit einer die Kreiselachse einschließenden Radialebene einen sich aufwärts entgegen Umlaufrichtung öffnenden Anstellwinkel (β) einschließt.

8. Bodenbearbeitungswerkzeug nach einem der Ansprüche 1 bis 7, **dadurch gekennzeichnet,** daß der Horizontalzinken (8,8') an seinem Ende einen Freischnittwinkel (γ) aufweist.

9. Bodenbearbeitungswerkzeug nach einem der Ansprüche 1 bis 8, **dadurch gekennzeichnet,** daß der Horizontalzinken (8,8') an seiner in Umlaufrichtung vor deren Längsseite eine Schneide (13) aufweist.

10. Bodenbearbeitungswerkzeug nach einem der Ansprüche 1 bis 9, **dadurch gekennzeichnet,** daß die Horizontalzinken (8,8') eines Zinkenkreisels (2) in gleicher Umlaufebene angeordnet sind.

11. Bodenbearbeitungswerkzeug nach einem der Ansprüche 1 bis 9, **dadurch gekennzeichnet,** daß die Horizontalzinken (8,8') eines Zinkenkreisels (2) höhenversetzt in verschiedenen Umlaufebenen angeordnet sind.

12. Bodenbearbeitungswerkzeug nach einem der Ansprüche 1 bis 11, **dadurch gekennzeichnet,** daß der Flugkreis (10) des Außenendes (9) eines Horizontalzinkens (8 oder 8') eines Zinkenkreisels (2) den Innenkreis (11) eines benachbarten Zinkenkreisels (2) teilweise überdeckt.
